(19) Europäisches Patentamt
European Patent Office
Office européen des brevets

(11) **EP 3 602 772 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **17720785.9**

(22) Anmeldetag: **02.05.2017**

(51) Internationale Patentklassifikation (IPC):
**H02P 23/00** *(2016.01)* **H02P 1/46** *(2006.01)*
**H02P 29/64** *(2016.01)*

(52) Gemeinsame Patentklassifikation (CPC):
**H02P 23/0031; H02P 1/46; H02P 29/64**

(86) Internationale Anmeldenummer:
**PCT/EP2017/060369**

(87) Internationale Veröffentlichungsnummer:
**WO 2018/202277 (08.11.2018 Gazette 2018/45)**

(54) **BETRIEBSVERFAHREN FÜR EINEN ELEKTROMOTOR UND SANFTSTARTER**

METHOD OF OPERATION FOR AN ELECTRIC MOTOR, AND SOFT STARTER

PROCÉDÉ POUR FAIRE FONCTIONNER UN MOTEUR ÉLECTRIQUE ET DÉMARREUR PROGRESSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.02.2020 Patentblatt 2020/06**

(73) Patentinhaber: **Siemens Aktiengesellschaft 80333 München (DE)**

(72) Erfinder:
• **NANNEN, Hauke 90443 Nürnberg (DE)**
• **ZATOCIL, Heiko 90469 Nürnberg (DE)**

(56) Entgegenhaltungen:
**US-A1- 2005 269 982**

• **MATSUI N ET AL: "A novel starting method of sensorless salient-pole brushless motor", INDUSTRY APPLICATIONS SOCIETY ANNUAL MEETING, 1994., CONFERENCE RECORD OF THE 1994 IEEE DENVER, CO, USA 2-6 OCT, NEW YORK, NY, USA,IEEE, 2. Oktober 1994 (1994-10-02), Seiten 386-392, XP010124073, DOI: 10.1109/IAS.1994.345475 ISBN: 978-0-7803-1993-6**

• **: Viktor Bobek: "Introduction PMSM Electrical Parameters Measurement", , 1. Februar 2013 (2013-02-01), XP055444801, Gefunden im Internet: URL:https://www.nxp.com/docs/en/application-note/AN4680.pdf [gefunden am 2018-01-25]**

• **SCHRODL M ET AL: "Statistic properties of the INFORM method for highly dynamic sensorless control of pm motors down to standstill", THE 29TH ANNUAL CONFERENCE OF THE IEEE INDUSTRIAL ELECTRONICS SOCIETY, 2003. IECON '03, IEEE SERVICE CENTER, PISCATAWAY, NJ, Bd. 2, 2. November 2003 (2003-11-02), Seiten 1479-1486, XP010691108, DOI: 10.1109/IECON.2003.1280276 ISBN: 978-0-7803-7906-0**

• **PINJIA ZHANG ET AL: "Improving Thermal Recovery Time for Soft-Starter-Connected AC Motors With Intermittent Periodic Duty Cycles", IEEE TRANSACTIONS ON INDUSTRY APPLICATIONS, IEEE SERVICE CENTER, PISCATAWAY, NJ, US, Bd. 46, Nr. 5, 1. September 2010 (2010-09-01), Seiten 1927-1935, XP011313124, ISSN: 0093-9994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 602 772 B1

## Beschreibung

Betriebsverfahren für einen Elektromotor und Sanftstarter Die Erfindung betrifft ein Verfahren zum Betrieb eines Elektromotors nach Anspruch 1, das eine selbsttätige Parametererfassung umfasst. Ebenso betrifft die Erfindung ein Computerprogrammprodukt nach Anspruch 14 mit dem das Betriebsverfahren durchführbar ist. Gleichermaßen betrifft die Erfindung eine Steuereinheit, die mit einem entsprechenden Computerprogrammprodukt ausgestattet ist. Die Erfindung betrifft auch einen Sanftstarter, der dazu ausgebildet ist, das Betriebsverfahren umzusetzen. Gleichermaßen betrifft die Erfindung eine Motoranordnung mit einem Elektromotor, die über einen solchen Sanftstarter verfügt.

Aus der Druckschrift US 2010/0060210 A1 sind ein Verfahren und eine Vorrichtung zur automatischen sensorlosen Bestimmung von Parametern einer permanenterregten Synchronmaschine bekannt, die auf der Nutzung eines Frequenzumrichters basiert. In diesem Verfahren wird zunächst eine Orientierung des Rotors erkannt wird. In einem weiteren Schritt werden im Stator elektrische Signale ausgegeben um eine Induktivität entlang einer d-Achse und einer q-Achse des Rotors zu ermitteln. Während des Verfahrens ist der Rotor stationär. Die Veröffentlichung P. Zhang, Y. Du, T. G. Habetler and B. Lu, "Improving Thermal Recovery Time for Soft-Starter-Connected AC Motors With Intermittent Periodic Duty Cycles," in IEEE Transactions on Industry Applications, vol. 46, no. 5, pp. 1927-1935, Sept.-Oct. 2010, XP11313124 offenbart einen Sanftstarter, bei dem im Nulldurchgang einer Phase der Statorwiderstand einer elektrischen Maschine bestimmt wird.Die Veröffentlichung N. Matsui and T. Takeshita, "A novel starting method of sensorless salient-pole brushless motor," Proceedings of 1994 IEEE Industry Applications Society Annual Meeting, 1994, pp. 386-392 vol.l, XP10124073 offenbart die Bestimmung der Statorinduktivität bei einem bürstenlosen Motor mit Permanentmagneten.

Die bisher unveröffentlichte Internationale Anmeldung mit dem amtlichen Aktenzeichen PCT/EP2016/074880 offenbart ein Verfahren zur Ausrichtung einer Drehstrommaschine, in dem ein optimaler Zündwinkel ermittelt wird und anhand des optimalen Zündwinkels eine Rotorausrichtung erfolgt, die anschließend plausibilisiert wird.

In der Automatisierungstechnik besteht Bedarf an einem Betriebsverfahren, in dem die Motorparameter ermittelt werden und basierend hierauf ein sicherer Betrieb des Elektromotors gewährleistet wird. Es besteht insbesondere Bedarf an einem selbsttätig ablaufenden Verfahren, um Fehlparametrierungen infolge von Benutzerfehlern zu vermeiden, die wiederum zu Beschädigungen des Elektromotors führen können. Dabei sind diese Funktionen robust und kosteneffizient zu implementieren. Zusätzlich wird der Einsatz von energieeffizienten Elektromotortypen angestrebt. Der Erfindung liegt die Aufgabe zugrunde, ein Betriebsverfahren bereitzustellen, das zuverlässig ist und auf einfacher, kosteneffizienter Hardware umsetzbar ist, und auch zur Verwendung an energieeffizienten Typen von Elektromotoren geeignet ist.

Die zugrundeliegende Aufgabenstellung wird durch das erfindungsgemäße Verfahren zur selbsttätigen Parameterbestimmung gelöst. Das Verfahren dient dazu, Parameter eines Elektromotors bei dessen Installation oder während des Betriebs, beispielsweise nach einem Speicher-Reset, automatisch zu erkennen um sie einer entsprechenden Steuereinheit des Elektromotors zur Verfügung zu stellen. Dabei ist das Verfahren insbesondere für einen Elektromotor geeignet, der eine permanente Erregung aufweist.

Das Verfahren ist ferner besonders für einen Elektromotor geeignet, der als permanenterregte Synchronmaschinen, auch kurz PMSM genannt, ausgebildet ist. Im Verfahren wird in einem Schritt eine definierte Ausrichtung des Rotors zum Stator des Elektromotors hergestellt. Ein geeignetes Ausrichtungsverfahren ist beispielsweise in der bisher unveröffentlichten Internationalen Anmeldung mit dem Aktenzeichen PCT/EP2016/074880 offenbart. Im ausgerichteten Zustand liegen sich der magnetische Nordpol des Rotors und der magnetische Südpol des Stators unmittelbar gegenüber. Gleichzeitig liegen sich der magnetische Südpol des Rotors und der magnetische Nordpols des Stators unmittelbar gegenüber. In einem weiteren Schritt wird ein Testpuls in mindestens einer Statorwicklung des Elektromotors entlang der Ausrichtungsrichtung des Rotors ausgegeben. Der Testpuls wird dabei beispielsweise durch ein einmaliges Schalten von mindestens zwei Halbleiterschaltern, beispielsweise durch Zünden von Thyristoren in zwei zu entsprechenden Statorwicklungen gehörigen stromführenden Phasen, erzeugt. Durch den Testpuls wird im Elektromotor ein Strom erzeugt.

Das Auslösen des Testpulses, der einem Ansteigen und Absteigen einer Stromstärke im Elektromotor entspricht, definiert zeitlich ein Erfassungsfenster zur Ermittlung von mindestens einem Parameter des Elektromotors. Das Erfassungsfenster umfasst eine Startphase, in der durchgehend ein Anstieg der Stromstärke des Testpulses vorliegt. Das Erfassungsfenster umfasst auch eine Endphase, in der durchgehend ein Absinken der Stromstärke des Testpulses vorliegt.

In einem weiteren Verfahrensschritt erfolgt in der Startphase und/oder der Endphase eine Ermittlung einer Motorinduktivität des Elektromotors. Während der Startphase und der Endphase des Erfassungsfensters liegt eine reduzierte Stromstärke des Testpulses vor, so dass eine währenddessen erfasste Motorspannung im Wesentlichen mit der vorliegenden Motorinduktivität korrespondiert. Der Einfluss eines Motorwiderstands auf die während der Startphase oder Endphase vorliegende Motorspannung ist minimiert und dadurch vernachlässigbar. Folglich ist die Motorinduktivität einfach über eine geringe Anzahl an Messgrößen ermittelbar.

Alternativ oder ergänzend zur Ermittlung der Motorinduktivität erfolgt ein weiterer Schritt, in dem während einer Amplitudenphase des Testpulses eine Ermittlung des Motorwiderstandes erfolgt. Unter der Amplitudenphase ist dabei der zeitliche Abschnitt des Testpulses zu verstehen, in dem die Stromstärke des Testpulses ihr Maximum erreicht und der zugehörige Stromgradient, also die Ableitung der Stromstärke nach der Zeit, *di/dt* zu Null wird. Die Amplitudenphase liegt dabei zwischen der Startphase und der Endphase des Testpulses. In der Amplitudenphase erreicht der Stromgradient ein Minimum, so dass währenddessen der induktive Einfluss auf die Motorspannung minimiert ist. Der Elektromotor verhält sich in der Amplitudenphase im Wesentlichen wie ein resistiver Widerstand. Infolgedessen ist der Motorwiderstand auch bei einer Vernachlässigung des induktiven Einflusses währenddessen mit hoher Genauigkeit ermittelbar. Folglich können mit dem beanspruchten Verfahren während der Dauer eines einzigen Testpulses zwei Parameter des Elektromotors präzise und schnell automatisch ermittelt werden. Das Verfahren erfordert keine speziellen Sensoren für den Motorwiderstand und basiert auf Messvorrichtungen, die bei Sanftstartern ohnehin vorhanden sind. Damit ist die skizzierte Ausführungsform des Verfahrens in einfacher Weise in einem Sanftstarter implementierbar.

Das beanspruchte Verfahren erfordert auch keine aufwendige Herstellung von Testpulsfolgen, die nur mittels Frequenzumrichtern erzeugbar sind. Vielmehr ist der Testpuls durch das Zünden von Thyristoren in mindestens zwei stromführenden Phasen erzeugbar. Dabei stellen die Startphase und/oder die Endphase des Testpulses einen besonders geeigneten Zeitraum zur exakten, schnellen und präzises Ermittlung der Motorinduktivität dar. Das beanspruchte Verfahren ist somit auf einem Sanftstarter implementierbar, was gegenüber einem Frequenzumrichter eine vereinfachte und kosteneffizientere Lösung darstellt.

Darüber hinaus kann im beanspruchten Verfahren in einem weiteren Schritt der Rotor mittels eines Anlaufpulses in Rotation versetzt werden. Darauf werden in einem weiteren Schritt induzierte Motorspannungen in den Statorwicklungen erfasst und diese geometrisch addiert. Ebenso wird eine Drehgeschwindigkeit, bevorzugt eine elektrische Drehgeschwindigkeit, des Rotors erfasst und dem weiteren Verfahren zugrundegelegt. Die Drehgeschwindigkeit des Rotors ist beispielsweise mit einem Verfahren gemäß der bisher unveröffentlichten Internationalen Anmeldung mit dem Aktenzeichen PCT/EP2016/077201 ermittelbar. In einem weiteren Verfahrensschritt wird ein Amplitudenwert der geometrisch addierten induzierten Motorspannungen ermittelt und in Verbindung der zum korrespondierenden Zeitpunkt vorliegenden Drehgeschwindigkeit des Rotors der magnetische Induktionsfluss des Elektromotors ermittelt. Das beanspruchte Verfahren ist somit auch in der Lage, bereits bei einer kurzen Drehung des Rotors mit dem magnetischen Induktionsfluss schnell einen weiteren betriebsrelevanten Parameter des Elektromotors zu bestimmen. Die Ermittlung des magnetischen Flusses basiert hier auf einer Nutzung von zuverlässig und genau ermittelbaren Größen, nämlich der Drehgeschwindigkeit des Rotors und des Amplitudenwerts der Motorspannung. Der magnetische Induktionsfluss des Elektromotors ist folglich ohne Weiteres präzise ermittelbar.

Des Weiteren können im beanspruchten Verfahren die Startphase, die Amplitudenphase und/oder die Endphase jeweils unmittelbar aufeinander folgen oder sich zumindest teilweise überlappen. Unter einem Überlappen ist zu verstehen, dass mehrere dieser Phasen gleichzeitig vorliegen können. Hierdurch erreichen die Startphase, die Amplitudenphase und die Endphase jeweils eine erhöhte Zeitdauer. Eine erhöhte Zeitdauer der jeweiligen Phasen erlaubt es, eine erhöhte Anzahl an Messwerten für die Ermittlung der Motorinduktivität und/oder des Motorwiderstands zu erfassen. Eine erhöhte Anzahl an Messwerten erlaubt eine genauere und zuverlässigere Ermittlung dieser Parameter.

Alternativ kann jeweils zwischen der Startphase und der Amplitudenphase und/oder zwischen der Amplitudenphase und der Endphase eine Inaktivphase vorliegen. In einer Inaktivphase unterbleiben die Erfassung von Messwerten, und folglich auch die Ermittlung von daraus abgeleiteten Größen wie die Motorinduktivität oder der Motorwiderstand. Dadurch wird die Erzeugung von Messwerten jeweils auf die Startphase, die Amplitudenphase und die Endphase beschränkt, was zu einer verringerten Anzahl an Messwerten führt. Die Beschränkung auf eine verringerte Anzahl an Messwerten erlaubt es, das beanspruchte Verfahren auch auf einfacher Hardware mit reduzierter Rechenleistung durchzuführen. Das gewährleistet, dass das beanspruchte Verfahren schnell abläuft und auch auf bestehender Hardware mit geringer Rechenkapazität im Rahmen einer Nachrüstung zu implementieren. Die Dauer und Lage einer Inaktivphase im Erfassungsfenster sind dabei durch eine Benutzereingabe und/oder eine maschinelle Vorgabe, beispielsweise von einer übergeordneten Steuereinheit vorgebbar. Die übergeordnete Steuereinheit kann als Speicherprogrammierbare Steuerung SPS, als Handparametriergerät und/oder als Computer-Cloud ausgebildet sein. Ergänzend oder alternativ kann die Dauer und Lage einer Inaktivphase auch durch ein Computerprogrammprodukt erfolgen, das den Ablauf des beanspruchten Verfahrens steuert, beispielsweise anhand einer Steuer- und/oder Regelungsroutine.

Weiterhin kann im beanspruchten Verfahren die Ermittlung der Motorinduktivität anhand einer gemessenen Motorspannung und einem Stromgradienten ermittelt werden. Die Motorspannung und der zugehörige der Stromgradient des Testpulses sind über bestehende Messvorrichtungen mit einer hinreichend hohen Abtastrate messbar. Die Abtastrate für die Motorspannung und/oder den Stromgradienten liegen dabei zwischen 500 Hz und 100kHz, bevorzugt zwischen 1kHz und 10kHz, was für die Startphase und/oder die Endphase eine ausreichende Anzahl an Messwerten bereitstellt.

Ebenso kann im beanspruchten Verfahren der Motorwiderstand mittels einer gemessenen Motorspannung und einer zugehörigen Stromstärke ermittelt werden. Unter dem Begriff "zugehörig" ist hierbei zu verstehen, dass die Messwerte für die jeweilige Größe zum selben Zeitpunkt erfasst sind. Insgesamt wird durch das beanspruchte Verfahren eine einfache und robuste Möglichkeit zur Verfügung gestellt, selbsttätig die entsprechenden Parameter des Elektromotors zu ermitteln.

Darüber hinaus kann die Ermittlung des Motorwiderstands auch auf dem Stromgradienten in Verbindung mit der zuvor ermittelten Motorinduktivität erfolgen. Hierdurch kann auch der reduzierte induktive Einfluss bei der Ermittlung des Motorwiderstands näher berücksichtigt werden. Ebenso kann die Ermittlung der Motorinduktivität auf Basis des zuvor ermittelten Motorwiderstands in Verbindung mit dem Stromgradienten erfolgen. Somit wird die erzielbare Erfassungsgenauigkeit weiter gesteigert.

In einer weiteren Ausführungsform des beanspruchten Verfahrens werden beim Ermitteln des magnetischen Induktionsflusses für diesen mehrere Werte ermittelt. Mehrere ermittelte Werte für den magnetischen Induktionsfluss sind über eine einstellbare Periode hinweg zusammenfassbar und können einer statistischen Auswertung zugrundegelegt werden. Da über eine Drehung des Rotors hinweg häufig ein oszillierender Wert für den magnetischen Induktionsfluss ermittelt wird, ist durch eine statistische Auswertung eine präzisere Aussage über den magnetischen Induktionsfluss im Elektromotor möglich. Mögliche statistische Auswertungen können die Bildung eines arithmetischen oder geometrischen Mittelwerts von Werten über eine Periode hinweg sein oder ein Medianwert. Alternativ oder ergänzend kann die statistische Auswertung auch anhand eines Abgleichs mit einem virtuellen Modell des Elektromotors erfolgen. Die Dauer und Lage der Periode in Bezug auf eine vorliegende Winkellage des Rotors ist durch eine Benutzervorgabe oder eine maschinelle Vorgabe einstellbar oder durch feste Werte vorgegeben. Die maschinelle Vorgabe kann dabei beispielsweise durch eine übergeordnete Steuereinheit oder ein Computerprogrammprodukt infolge einer Steuer- und/oder Regelungsroutine erfolgen, das die Durchführung des Verfahrens steuert.

Des Weiteren können im beanspruchten Verfahren die Schritte zur Ermittlung des Motorwiderstands in einem ersten Durchlauf durchgeführt werden um so einen Referenzwert für den Motorwiderstand zu erhalten. Dies kann beispielsweise bei einer Inbetriebnahme des Elektromotors erfolgen, in der von einer Fehlerfreiheit des Elektromotors ausgegangen werden kann. Der Referenzwert für den Motorwiderstand wird gespeichert und ist bei späteren Startvorgängen zum Abgleich mit dann ermittelten Werten für den Motorwiderstand nutzbar. In einem zweiten Durchgang wird der Motorwiderstand gemäß dem beanspruchten Verfahren ermittelt und mit dem Referenzwert verglichen. Wenn der im zweiten Durchgang ermittelte Motorwiderstand den Referenzwert um einen einstellbaren ersten Schwellenwert betragsmäßig übersteigt, wird eine Erwärmung des Elektromotors erkannt. Dabei kann es sich um eine Erwärmung des Rotors, des Stators, oder einer Kombination von Komponenten des Elektromotors handeln. Der zweite Durchgang kann unmittelbar auf den ersten Durchgang folgen oder zwischen beiden Durchgängen weitere Starts des Elektromotors liegen. Der erste Schwellenwert ist dabei durch eine Benutzereingabe oder eine Vorgabe einer Steuereinheit einstellbar. Dadurch ist eine Erwärmung des Elektromotors sensorlos zuverlässig ermittelbar. Ergänzend oder alternativ ist ein Windungsschluss im Elektromotor erkennbar, wenn der im zweiten Durchgang ermittelte Wert für den Motorwiderstand den im ersten Durchgang ermittelten Wert für den Motorwiderstand unterschreitet.

Die Erkennung der Erwärmung läuft schnell ab und ist ohne Verzögerung in den bestimmungsgemäßen Betrieb des Elektromotors integrierbar, beispielsweise in einen Startvorgang. Durch entsprechende Einstellung des ersten Schwellenwerts sind übermäßig thermische Beanspruchungen des Elektromotors, die im Weiterbetrieb zu Schäden im Elektromotor führen können, frühzeitig identifizierbar. Zusätzlich ist eine Windungsschlusserkennung umsetzbar. Dadurch wird insgesamt ein hohes Maß an Sicherheit und Zuverlässigkeit im Betrieb des Elektromotors erzielt.

Im beanspruchten Verfahren können im ersten Durchgang auch die Schritte zur Ermittlung des magnetischen Induktionsflusses durchgeführt werden um so einen zugehörigen Referenzwert zu erhalten. In einem zweiten Durchgang wird der magnetische Induktionsfluss ermittelt und mit dem Referenzwert verglichen. Wenn der im zweiten Durchgang ermittelte magnetische Induktionsfluss den Referenzwert betragsmäßig um mindestens einen einstellbaren zweiten Schwellenwert unterschreitet, wird eine zumindest teilweise Entmagnetisierung im Rotor, insbesondere der dort eingesetzten Permanentmagneten einer permanenterregten Synchronmaschine, erkannt. Eine zumindest teilweise Entmagnetisierung des Rotors stellt eine Beschädigung des Elektromotors dar, die zur Vermeidung weitergehender Schäden frühzeitig zu erkennen ist. Das beanspruchte Verfahren gewährleistet somit einen sicheren und zuverlässigen Betrieb eines Elektromotors.

Des Weiteren kann mittels des beanspruchten Verfahrens eine Erwärmung des Elektromotors, insbesondere des Rotors, erkannt werden. Dazu wird der magnetische Induktionsfluss in einem ersten und zweiten Durchgang ermittelt. Ferner wird anhand der vorhandenen Betriebsdaten ausgeschlossen, dass die Permanentmagnete des Elektromotors während der beiden Durchgänge ihre Curie-Temperatur überschritten haben. Dies erfolgt beispielsweise anhand von gespeicherten Daten über den vorliegenden Lastzustand des Elektromotors während der beiden Durchgänge. Magnetische Materialien, die für Permanentmagnete eingesetzt werden, weisen unterhalb ihrer Curie-Temperatur temperaturabhängige magnetische Eigenschaften auf. Infolgedessen ist der im Betrieb des Elektromotors auftretende magnetische Induktionsfluss temperaturabhängig. Unterhalb der Curie-Temperatur, bei der eine Beschädigung des Permanentmagneten eintritt, sind die magnetischen Eigenschaften im Hinblick auf Temperaturänderungen reversibel. Basierend auf Materialparametern des für die Permanentmagnete eingesetzten Materials ist damit anhand von Erfassungen des magnetischen Induktionsflusses eine Erwärmung des Permanentmagneten erfassbar. Hierzu wird in einem ersten Durchgang ein Referenzwert für den magnetischen Induktionsfluss ermittelt und in einem späteren zweiten Durchgang der magnetische Induktionsfluss erneut erfasst. Bei einem Abgleich zwischen den im ersten und zweiten Durchgang erfassten Werten für den magnetischen Induktionsfluss wird eine Erwärmung des Elektromotors erkannt, wenn der im zweiten Durchgang erfasste Induktionsfluss den Referenzwert betragsmäßig unterschreitet. Hierdurch wird der Funktionsumfang des beanspruchten Verfahrens erweitert.

In einer weiteren Ausführungsform des Betriebsverfahrens kann eine Warnung ausgegeben werden, wenn eine Erwärmung des Elektromotors und/oder eine teilweise Entmagnetisierung des Rotors festgestellt wird. Alternativ oder ergänzend kann auch ein weiterer Betrieb des Elektromotors unterbunden werden um so weitergehende Schäden zu vermeiden. Dazu sind der erste und zweite Schwellenwert durch den Benutzer und/oder eine Vorgabe der zugehörigen Steuereinheit entsprechend zu wählen.

Die skizzierte Aufgabenstellung wird auch durch ein erfindungsgemäßes Computerprogrammprodukt gelöst. Das Computerprogrammprodukt ist in einer Steuereinheit ausführbar ausgebildet. Das Computerprogrammprodukt kann als Software oder Firmware in einem Speicher speicherbar und durch ein Rechenwerk ausführbar ausgebildet sein. Alternativ oder ergänzend kann das Computerprogrammprodukt auch zumindest teilweise als festverdrahtete Schaltung ausgebildet sein, beispielsweise als ASIC. Das Computerprogrammprodukt ist dazu ausgebildet, Messwerte zu empfangen, auszuwerten und Befehle an Komponenten einer Motorsteuervorrichtung, insbesondere eines Sanftstarters, zu erzeugen. Erfindungsgemäß ist das Computerprogrammprodukt dazu ausgebildet, mindestens eine Ausführungsform des skizzierten Verfahrens zur Parameterbestimmung in einem Elektromotor, insbesondere einer permanenterregten Synchronmaschine, umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. Beispielsweise kann ein Teil des Parameterbestimmungsverfahrens in einem Sanftstarter durchgeführt werden und ein anderer Teil des Parameterbestimmungsverfahrens in einer übergeordneten Steuereinheit, wie beispielsweise einer SPS, einem Handparametriergerät oder einer Computer-Cloud.

Gleichermaßen wird die zugrundeliegende Aufgabenstellung durch eine erfindungsgemäße Steuereinheit gelöst, die dazu ausgebildet ist, Messwerte einer Motorspannung, einer Stromstärke und/oder eines Stromgradienten zu empfangen. Die Steuereinheit ist auch dazu ausgebildet, Befehle zur Betätigung eines Halbleiterschalters eines Sanftstarters zu erzeugen und auszugeben. Erfindungsgemäß ist die Steuereinheit mit einem zuvor beschriebenen Computerprogrammprodukt ausgestattet, über das die Steuereinheit betrieben wird und das erfindungsgemäße Parameterbestimmungsverfahren implementiert. Die Steuereinheit kann dabei als interne Steuereinheit ausgebildet sein, die in einem Sanftstarter integriert ist. Alternativ kann die Steuereinheit auch als übergeordnete Steuereinheit ausgebildet sein, beispielsweise als Speicherprogrammierbare Steuerung, kurz SPS, die das erfindungsgemäße Verfahren umsetzt. Die übergeordnete Steuereinheit kann auch als Handparametriergerät oder Computer-Cloud ausgebildet sein. Weiter alternativ kann die Steuereinheit auch als eine Kombination einer internen Steuereinheit und einer übergeordneten Steuereinheit ausgebildet sein, die das beanspruchte Computerprogrammprodukt in segmentierter Form im Zusammenspiel ablaufen lassen.

Die Aufgabenstellung wird ebenfalls durch einen erfindungsgemäßen Sanftstarter gelöst, der dazu ausgebildet ist, einen Elektromotor, insbesondere eine permanenterregte Synchronmaschine, anzusteuern. Der Sanftstarter ist dazu mit einer Stromversorgung und dem Elektromotor verbunden. Der Sanftstarter ist erfindungsgemäß mit einer oben skizzierten Steuereinheit ausgestattet. Die Steuereinheit ist als interne Steuereinheit ausgebildet, die dazu geeignet ist, zumindest ein Segment eines oben beschriebenen erfindungsgemäßen Computerprogrammprodukts auszuführen und darüber den Elektromotor zu betätigen. Alternativ kann die interne Steuereinheit auch dazu ausgebildet sein, das erfindungsgemäße Computerprogrammprodukt monolithisch, also komplett, auszuführen und umzusetzen. Ferner ist der Sanftstarter dazu ausgebildet, mit einer übergeordneten Steuereinheit zusammenzuwirken. Die übergeordnete Steuereinheit ist auch dazu ausgebildet, ein Segment des erfindungsgemäßen Computerprogrammprodukts auszuführen und zum Betrieb des Elektromotors mit dem erfindungsgemäßen Sanftstarter zusammenzuwirken. Gleichermaßen ist der Sanftstarter dazu ausgebildet, Eingaben eines Benutzers, beispielsweise für die Dauer der Inaktivphasen und/oder die Periode für die statistische Auswertung zu empfangen. Alternativ oder ergänzend kann der Sanftstarter auch dazu ausgebildet sein, diese Eingaben von der übergeordneten Steuereinheit zu empfangen.

Die skizzierte Aufgabenstellung wird auch durch die erfindungsgemäße Motoranordnung gelöst, die zum Betrieb eines Elektromotors, insbesondere einer permanenterregten Synchronmaschine, dient.

Die Erfindung wird im Folgenden anhand einzelner Ausführungsformen beschrieben. Die Merkmale der einzelnen Ausführungsformen sind dabei untereinander kombinierbar. Es zeigt im Einzelnen:

FIG 1      einen Elektromotor mit zueinander angerichtetem Stator und Rotor gemäß einem Verfahrensschritt;

FIG 2      eine erste Ausführungsform des beanspruchten Verfahrens;

FIG 3      eine zweite Ausführungsform des beanspruchten Verfahrens;

FIG 4      eine dritte Ausführungsform des beanspruchten Verfahrens;

FIG 5      eine vierte Ausführungsform des beanspruchten Verfahrens;

FIG 6      eine Ausführungsform einer beanspruchten Motoranordnung.

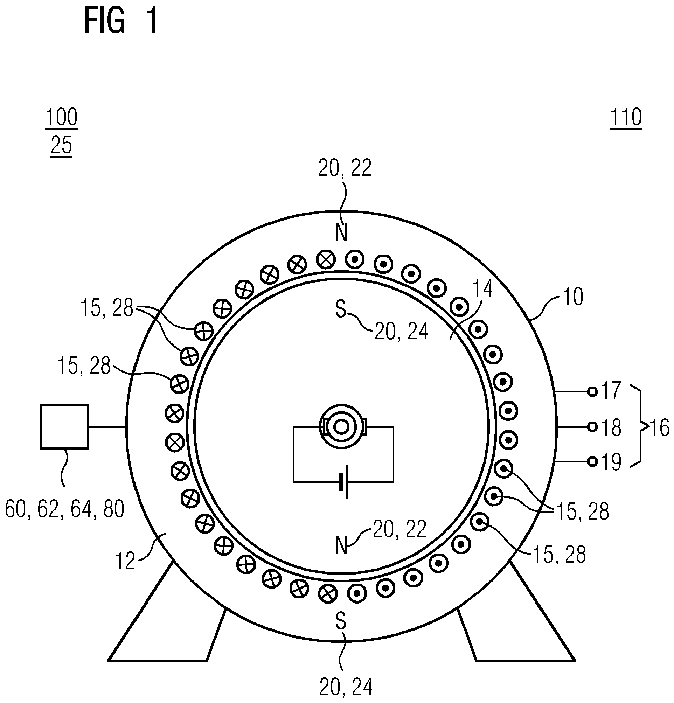

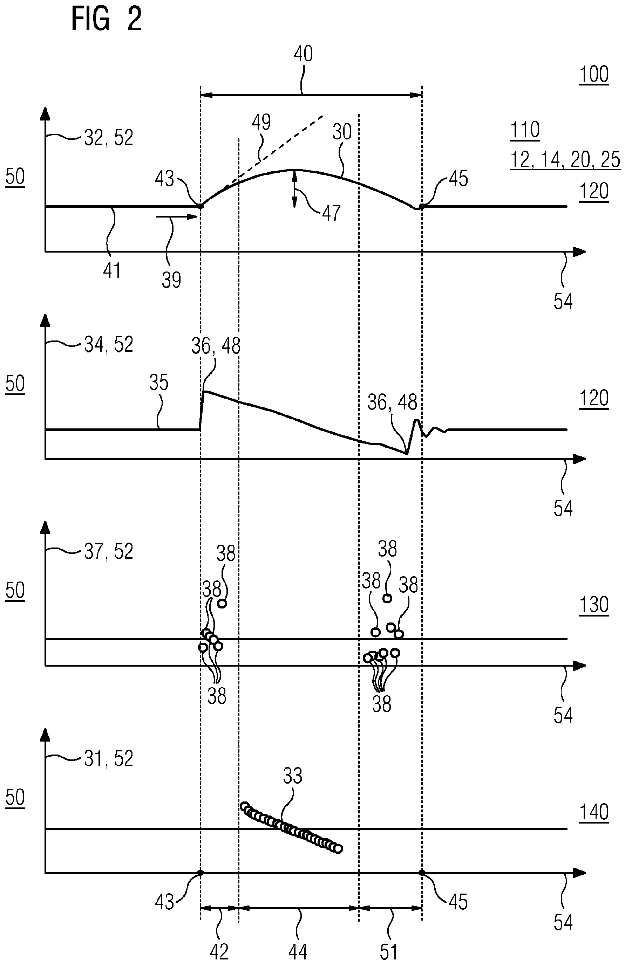

FIG 1 zeigt schematisch einen Elektromotor 10, der als permanenterregte Synchronmaschine ausgebildet ist und mit einer Stromversorgung 16 verbunden ist. Die Stromversorgung 16 umfasst eine erste Phase 17, eine zweite Phase 18 und eine dritte Phase 19, die die Energie zum Betrieb des Elektromotors 10 bereitstellen. Der Elektromotor 10 umfasst einen Stator 12, in dem ein Rotor 14 drehbar aufgenommen ist. Der Rotor 14 ist permanenterregt ausgebildet und weist, so dass die Lage der magnetischen Pole 20 in einem rotorfesten Bezugssystem stationär ist. Im Stator 20 sind Wicklungen 15 angeordnet, die mit der Stromversorgung 16 gekoppelt sind. Ein Stromfluss 28 durch die Wicklungen 15 ist mittels eines Sanftstarters 60 steuerbar, der mit den Phasen 17, 18, 19 der Stromversorgung 16 gekoppelt ist. Der Sanftstarter 60 verfügt über eine Steuereinheit 62, die als interne Steuereinheit 64 ausgebildet ist und in der ein Computerprogrammprodukt 80 ausführbar gespeichert ist. Das Computerprogrammprodukt 80 ist dazu ausgebildet, den Sanftstarter 60 derart anzusteuern, dass zumindest eine Ausführungsform des in FIG 2 bis 5 skizzierten Parametererkennungsverfahrens 100 durchzuführen. Gemäß FIG 1 befindet sich der Elektromotor 10 im Stillstand. Durch den Sanftstarter 60 wird mittels des Computerprogrammprodukts 80 ein Stromfluss 28 in den Wicklungen 15 eingestellt, durch den im Stator 22 ein stationärer magnetischer Nordpol 22 und ein stationärer magnetischer Südpol 24 hergestellt wird. Die Nordpole 22 und Südpole 24 stehen sich jeweils paarweise gegenüber. Dadurch liegt gemäß FIG 1 eine Ausrichtung 25 im Sinne eines ersten Verfahrensschritts 110 des erfindungsgemäßen Verfahrens 100 vor.

FIG 2 zeigt Diagramme 50 mit jeweils einer vertikalen Größenachse 52 und einer horizontalen Zeitachse 54, die unterschiedliche physikalische Größen während einer Ausführungsform des beanspruchten Verfahrens 100 darstellen. Die Lagen der Zeitachsen 54 korrespondieren miteinander, so dass in jedem Diagramm 50 derselbe Zeitabschnitt dargestellt ist. Der Zeitverlauf entspricht der Pfeilrichtung an der Zeitachse 54. Die Ausführungsform gemäß FIG 2 geht von einem Zustand aus, in dem der erste Verfahrensschritt 110, wie beispielsweise in FIG 1 dargestellt, bereits durchgeführt ist und eine entsprechende Ausrichtung 25 der magnetischen Pole 20 im Stator 12 und im Rotor 14 vorliegt. Die Größen Stromstärke 32 und Motorspannung 34 in den Diagrammen 50 stellen dabei Messwerte dar, während die Größen Motorinduktivität 37 und Motorwiderstand 31 Rechenwerte darstellen.

Es erfolgt in einem zweiten Verfahrensschritt 120 eine Auslösung 39 eines Testpulses 30, der ein Strompuls durch zumindest eine Wicklung 15 des Stators 12 ist. Der Testpuls wird dabei durch das Schalten von Halbleiterschaltern an zwei nicht näher dargestellten stromführenden Phasen 17, 18, 19 erzeugt. Der Testpuls weist eine ansteigende und anschließend abfallende Stromstärke 32 auf. Durch die Auslösung 39 des Testpulses 30 wird ein Startzeitpunkt 43 definiert, der den Beginn eines Erfassungsfensters 40 bildet. Der Testpuls 30 weist während des Erfassungsfensters 40 einen veränderlichen Stromgradienten 49 auf. Das Abfallen der Stromstärke 32 des Testpulses 30 auf ein Ausgangsniveau 41 definiert einen Endzeitpunkt 45, der ein Ende des Erfassungsfensters 40 bildet. Das Erzeugen des Testpulses 30 gehört zu einem zweiten Verfahrensschritt 120 des beanspruchten Verfahrens 100. Während der Testpuls 30 vorliegt, also im Erfassungsfenster 40, erfolgen ein Anstieg und ein Abfall der vorliegenden Motorspannung 34, die erfasst wird. Das Erfassungsfenster 40 umfasst drei zeitliche Phasen, in denen für den Verlauf der Stromstärke 32 des Testpules 30 und der Motorspannung 34 unterschiedliche Werte und Kurvenverläufe vorliegen. Das Erfassungsfenster 40 umfasst eine Startphase 42, die im Wesentlichen mit dem Startzeitpunkt 43 beginnt. In der Startphase 42 liegt ein verhältnismäßig steiler Anstieg der anliegenden Spannung vor, die beim Testpuls 30 einen Stromfluss hervorruft. Der Stromfluss weist während des Testpulses 30 eine veränderliche Stromstärke 32 auf. In der Startphase 42 liegt ein lokales Extremum 36, nämlich ein lokales Maximum, der Motorspannung 34 vor. Das lokale Extremum 36 bildet auch ein betragsmäßiges Maximum 48. Auf die Startphase 42 folgt unmittelbar eine Amplitudenphase 44, in der der Testpuls 30 seine maximale Stromstärke 32 erreicht. Durch den abflachenden Verlauf der Stromstärke, also einem rückläufigen Stromgradienten, wird die vorliegende Motorspannung 34 ebenfalls verringert. Es folgt eine Endphase 51, die im Wesentlichen eine spiegelbildliche Umkehrung der Startphase 42 darstellt. Die Endphase 51 wird durch den Rückgang der Stromstärke 32 des Testpulses 30 auf das Ausgangsniveau 41 im Endzeitpunkt 45 beendet. Während der Endphase 51 liegt auch ein lokales Extremum 36, ein lokales Minimum, der Motorspannung 34 vor. Auch dieses lokale Extremum 36 bildet ein betragsmäßiges Maximum 48.

Ferner erfolgt in einem dritten Verfahrensschritt 130 ein Ermitteln einer Motorinduktivität 37. Der Erfassung der Motorinduktivität liegt die Gleichung

$$u = R \cdot i + L \cdot \frac{di}{dt}$$

mit

u:= Motorspannung,
R:= Motorwiderstand,
i:= Stromstärke,
L:= Motorinduktivität
$\frac{di}{dt}$:= Stromgradient,

zugrunde. Während der Startphase 42 und der Endphase 51 liegt eine reduzierte Stromstärke 32 des Testpulses 30 vor, so dass der Term, R·i, der den resistiven Anteil der Motorspannung 34 beschreibt betragsmäßig minimiert ist. Der resistive Anteil der Motorspannung 34 ist folglich vernachlässigbar und wird als Null angenommen. Der Stromgradient 49 wird während der Startphase 42 und der Endphase 51 gemessen, so dass mittels der gemessenen Motorspannung 34 und dem Stromgradienten 49 die Motorinduktivität 37 in einem dritten Verfahrensschritt 130 ermittelbar ist. Dabei wird in der Startphase 42 und der Endphase 51 eine Mehrzahl an Messungen der Motorspannung 34 und des Stromgradienten 49 durchgeführt, so dass jeweils für die Startphase 42 und die Endphase 51 eine Mehrzahl an Induktivitätswerten 38 ermittelt werden. Die Mehrzahl an Induktivitätswerte 38 ist in einem zusätzlichen Verfahrensschritt 170 statistisch auswertbar. Bereits die Auswertung von Induktivitätswerten 38 in der Startphase 42 oder der Endphase 51 liefert dabei eine präzise Erfassung der Motorinduktivität 37.

Darüber hinaus erfolgt in FIG 2 in einem vierten Verfahrensschritt 140 während der Amplitudenphase 44 eine Ermittlung des Motorwiderstands 31. Die Amplitudenphase 44 folgt unmittelbar auf die Startphase 42. An die Amplitudenphase 44 schließt sich unmittelbar die Endphase 51 an. Während der Amplitudenphase 44 erreicht der Stromgradient 49 ein Minimum. Der Ermittlung des Motorwiderstands 31 liegt dabei die folgende Gleichung zugrunde:

$$R = \frac{u - L \cdot \frac{di}{dt}}{i}$$

mit

u:= Motorspannung,
R:= Motorwiderstand,
i:= Stromstärke,
L:= Motorinduktivität
$\frac{di}{dt}$:= Stromgradient.

Durch das Minimum des Stromgradienten 49 während der Amplitudenphase 44 ist der Ausdruck, der den induktiven Anteil des Motorwiderstands 31 beschreibt, gering und damit vernachlässigbar. Der Motorwiderstand 31 ist damit lediglich anhand der gemessenen Motorspannung 37 und der gemessenen Stromstärke 32 des Testpulses 30 messbar. Die Ermittlung des Motorwiderstands 31 erfolgt während der Amplitudenphase 44 anhand einer Mehrzahl an Messungen der Stromstärke 32 des Testpulses 30 und der Motorspannung 34. Hierdurch liegen während der Amplitudenphase 44 eine Mehrzahl an Widerstandswerten 33 vor, die im in einem zusätzlichen Verfahrensschritt 170 statistisch auswertbar sind. Insgesamt liefert der vierte Verfahrensschritt 140 damit eine präzise Ermittlung des Motorwiderstands 31.

Der Testpuls 30 ist in seiner Amplitude 47 von einer Größe, die nur eine stark reduzierte Rotation des Rotors 14 im Stator 12 hervorruft. Während des ersten, zweiten, dritte und vierten Verfahrensschritts 110, 120, 130, 140 ist der Elektromotor 10 im Wesentlichen im Stillstand.

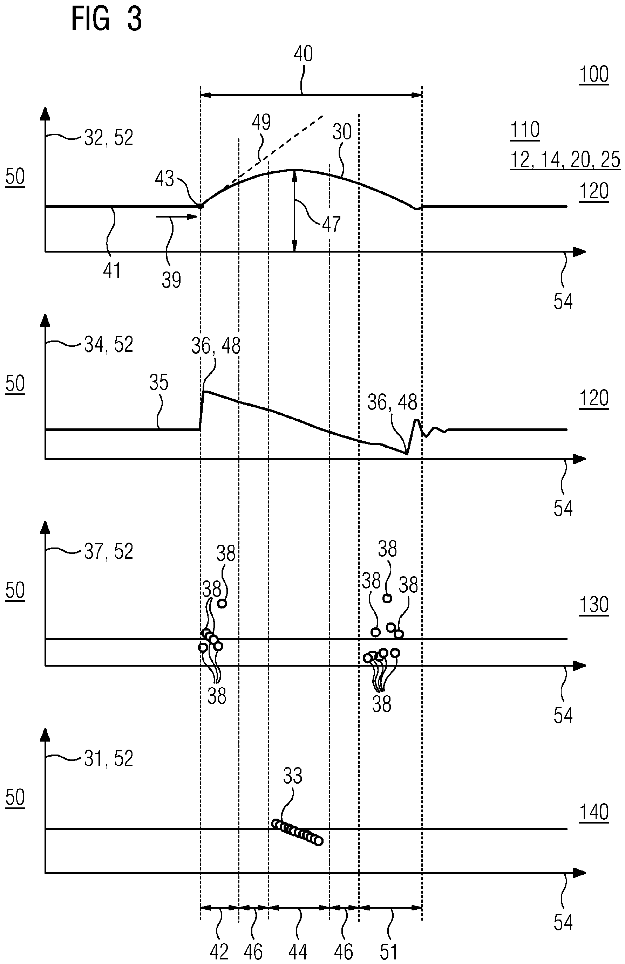

FIG 3 zeigt schematisch eine zweite Ausführungsform des beanspruchten Verfahrens 100. Für die FIG 3 gelten für gleiche Bezugszeichen die gleichen Erläuterungen wie zu FIG 2. Die Ausführungsform gemäß FIG 3 unterscheidet sich von der in FIG 2 im Wesentlichen dadurch, dass zwischen der Startphase 42 und der Amplitudenphase 44 eine Inaktivphase 46 vorliegt. Ebenso liegt zwischen der Amplitudenphase 44 und der Endphase 51 eine Inaktivphase 46. Während der Inaktivphase 46 unterbleiben sowohl die Messung von Stromstärke 32, Motorspannung 34 als auch die Ermittlung von Motorinduktivität 37 und Motorwiderstand 31. Die Dauer der Inaktivphasen 46 ist durch einen Benutzer oder eine Vorgabe durch eine nicht näher dargestellte Steuereinheit 62 eines Sanftstarters 60 einstellbar. Gleichermaßen ist die Dauer der Inaktivphasen 46 auch durch eine Vorgabe einer nicht näher dargestellten übergeordneten Steuereinheit 64 einstellbar. Durch Einstellung der Dauer der Inaktivphasen 46 ist die jeweilige Dauer der Startphase 42, der Amplitudenphase 44 und der Endphase 51 einstellbar oder durch einen festen Wert vorgebbar. Die Messung und Ermittlung der Stromstärke 32 des Testpulses 30, der Motorspannung 34, der Motorinduktivität 37 und des Motorwiderstand 31 wird so auf diskrete Zeiträume begrenzt. Hierdurch ist bei der Ermittlung der Motorinduktivität 37 und des Motorwiderstands 31 eine Fokussierung auf Zeiträume möglich, die die präzisesten Werte 33, 38 versprechen. Die Anzahl an Messvorgängen in der Startphase 42, der Amplitudenphase 44 und der Endphase 51 ist somit reduziert, was den erforderlichen Aufwand in puncto Rechenleistung senkt. Ferner wird so der Umfang der Eingangsdaten für eine spätere statistische Auswertung der Induktivitätswerte 38 und der Widerstandswerte 33 reduziert. Hierdurch erreicht das beanspruchte Verfahren 100 eine erhöhte Geschwindigkeit ohne signifikante Einbußen bei der Genauigkeit. Die während der Inaktivphasen 46 für das beanspruchte Verfahren 100 nicht genutzt Rechenleistung steht in einer Steuereinheit 62, die als interne Steuereinheit 64 und/oder übergeordnete Steuereinheit 66 ausgebildet ist, anderen Anwendungen zur Verfügung.

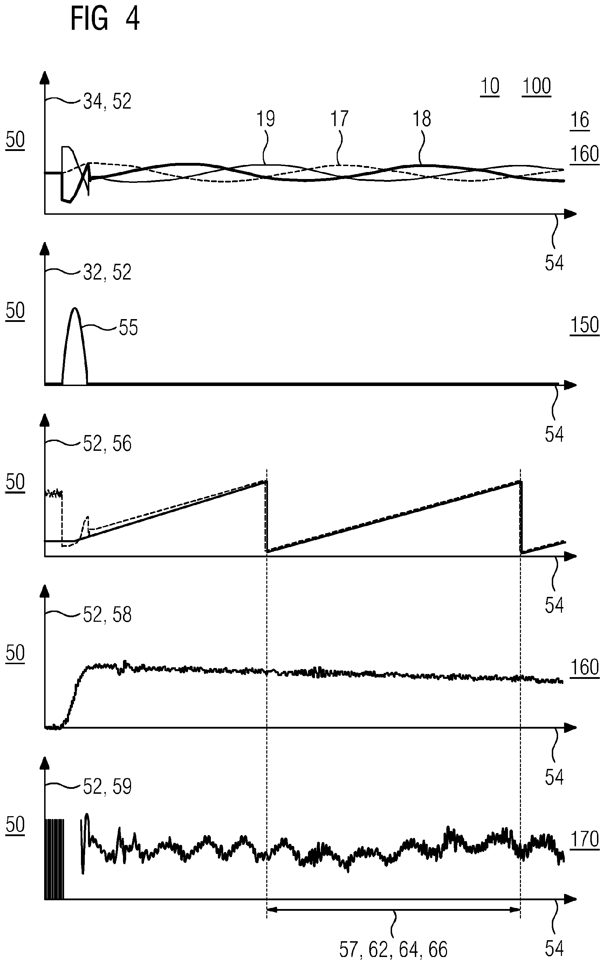

In FIG 4 ist eine dritte Ausführungsform des beanspruchten Verfahrens 100 dargestellt, die beispielsweise auf einer der Ausführungsformen gemäß FIG 2 oder FIG 3 basiert. In FIG 4 haben gleiche Bezugszeichen wie in FIG 2 oder FIG 3 die gleiche technische Bedeutung. Die einzelnen Diagramm 50 beziehen sich auf denselben Zeitraum, der über die Zeitachse 54 dargestellt ist. Im Diagramm 50 auf der Größenachse 52 für die Stromstärke 32 ein Anlaufpuls 55 dargestellt, der in einem fünfte Verfahrensschritt 150 ausgelöst wird. Infolgedessen stellen sich an einer Stromversorgung 16 mit drei Phasen 17, 18, 19 Motorspannungen 34 ein, die im Wesentlichen als 120°-phasenverschobene Sinuskurven ausgebildet sind. Durch den Anlaufpuls wird eine Rotation des Rotors 14 hervorgerufen, die als veränderliche Winkellage 56 des Rotors 14 abgebildet ist. Ferner wird durch den Anlaufpuls 55 eine Drehgeschwindigkeit 58 des Rotors 14 eingestellt, die nach dem Anlaufpuls 55 rückläufig ist. Während der Rotation mit abklingender, also leicht rückläufiger Drehgeschwindigkeit 58, wird die geometrische Addition der Motorspannungen 34 der Phasen 17, 18, 19 ermittelt. Basierend auf der geometrischen Addition und der erfassten Drehgeschwindigkeit 58 ist der magnetische Induktionsfluss 59 des Elektromotors 10 ermittelbar. Das Durchführen der geometrischen Addition und das Erfassen der Drehgeschwindigkeit 58 gehören dabei zu einem sechsten Verfahrensschritt 160. Basierend hierauf werden Amplitudenwerte für die Motorspannung 34 ermittelt, die zur Ermittlung des magnetischen Induktionsflusses 59 eingesetzt werden. Diese Ermittlung erfolgt während eines siebten Verfahrensschritts 170. Dabei liegt der Ermittlung des magnetischen Induktionsflusses folgende Gleichung zugrunde:

$$\hat{U} = \omega \psi$$

mit

$\hat{U} :=$     Amplitudenwert Motorspannung
$\omega :=$     Drehgeschwindigkeit
$\psi :=$     Magnetischer Induktionsfluss.

Die ermittelten Werte für den magnetischen Induktionsfluss 59 oszillierenden im Wesentlichen mit dem Sechsfachen der Drehgeschwindigkeit 58, d.h., dass der magnetische Induktionsfluss 59 während einer vollen Rotation der Rotors 14 sechs lokale Maxima und Minima aufweist. Die Oszillation erfolgt dabei mit einem Offset von der horizontalen Achse 54. Gemäß FIG 4 bildet eine Drehung, wie im Diagramm 50 zur Winkellage 56 des Elektromotors 10 dargestellt, eine einstellbare Periode 57, in der die ermittelten Werte für den magnetischen Induktionsfluss 59 statistisch ausgewertet werden. Hierdurch ist für die Ermittlung des magnetischen Induktionsflusses ein hohes Maß an Genauigkeit erreichbar. Die Dauer der einstellbaren Periode 57 ist durch eine Benutzereingabe und/oder eine Vorgabe einer Steuereinheit 62 einstellbar, die als interne Steuereinheit 64 oder als übergeordnete Steuereinheit 66, insbesondere als SPS, ausgebildet sein kann. Gleichermaßen ist die Lage der einstellbaren Periode 57 einstellbar, also die Definition eines Starts und eines Endes.

Das Verfahren 100 gemäß FIG 4 liefert, basierend auf einem Verfahren 100 nach FIG 2 oder FIG 3, ein vollständiges Bild in puncto Parameter des angeschlossenen Elektromotors 10. Das Verfahren 100 ist dabei ohne Weiteres in den Betrieb des Elektromotors 10 implementierbar und erlaubt eine sichere, genaue und schnelle selbsttätige Parameterbestimmung. Ferner ist das Verfahren 100 durch ein Computerprogrammprodukt 80 umsetzbar, das in der Steuereinheit 62 ausführbar ist.

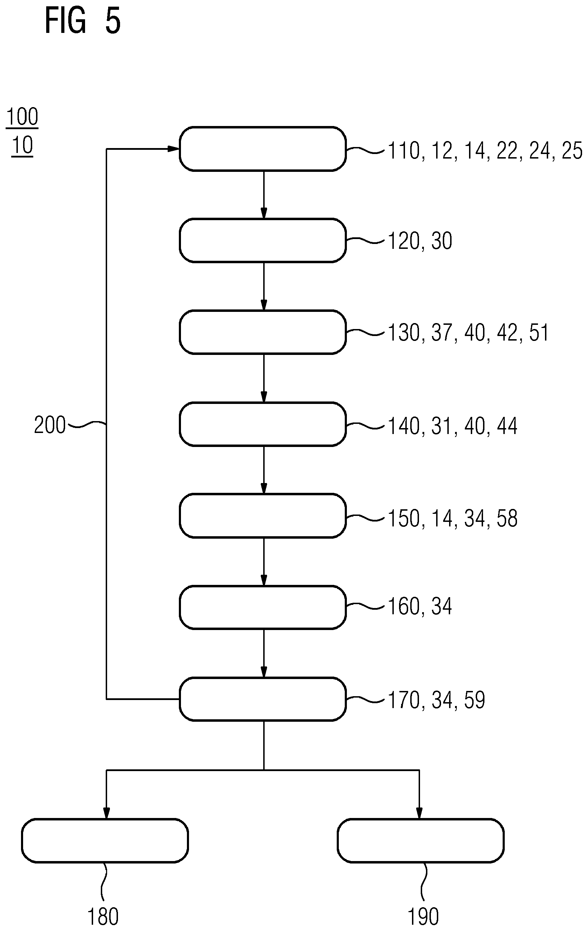

In FIG 5 ist schematisch der Ablauf einer vierten Ausführungsform des beanspruchten Verfahrens 100 zum Betrieb eines Elektromotors 10 dargestellt. Gleiche Bezugszeichen wie in den FIG 2 bis FIG 4 haben in FIG 5 dieselbe technische Bedeutung. Zunächst wird im ersten Schritt 110 eine Ausrichtung 25 des Rotors 14 zum Stator 12 hergestellt, bei der sich deren magnetische Nordpole 22 und magnetische Südpole 24 jeweils gegenüberstehen. Im zweiten Schritt 120 wird ein Testpuls 30 in einer Statorwicklung 15 erzeugt, der entlang der Ausrichtung 25 gerichtet ist. In einem dritten Schritt 130 wird eine Motorinduktivität 37 in einer Startphase 42 und/oder einer Endphase 51 ermittelt. Zusätzlich wird in einem vierten Schritt 140 in einer Amplitudenphase 44 des Erfassungsfensters 40 ein Motorwiderstand 31 ermittelt. Ferner wird in einem fünften Schritt 150 der Elektromotor 10 durch einen Anlaufpuls 55 in Rotation versetzt. Darauf erfolgen in einem sechsten Schritt 160 ein geometrisches Addieren von induzierten Motorspannungen 34 und eine Erfassung einer Drehgeschwindigkeit 58 des Rotors 14. Während des anschließenden siebten Schritts 170 werden Amplitudenwerte der geometrisch addierten induzierten Motorspannungen 34 ermittelt und einer Ermittlung eines magnetischen Flusses 59 des Elektromotors 10 zugrundegelegt. In einem ersten Durchgang des Verfahrens 100 erfolgt ausgehend vom siebten Schritt 170 eine Rückführung 200 auf den Ausgangszustand, von dem ausgehend der erste Verfahrensschritt für einen zweiten Durchgang durchgeführt wird.

Die im ersten Durchgang ermittelten Werte für den Motorwiderstand 31 und den magnetischen Induktionsfluss 59 werden als Referenzwerte gespeichert. Beim zweiten Durchgang des Verfahrens 100 wird in einem achten Schritt 180 der ermittelte Motorwiderstand 31 mit dem zugehörigen Referenzwert verglichen und eine Erwärmung des Elektromotors 10 erkannt, wenn der im zweiten Durchgang ermittelte Motorwiderstand 31 den zugehörigen Referenzwert betragsmäßig um mindestens einen einstellbaren ersten Schwellenwert übersteigt. Zusätzlich wird in diesem Fall im achten Verfahrensschritt 180 noch eine Warnung ausgegeben und/oder der weitere Betrieb des Elektromotors 10 unterbunden. Alternativ oder ergänzend wird in einem neunten Schritt 190 der ermittelte magnetische Induktionsfluss 59 mit dem zugehörigen Referenzwert verglichen. Wenn der im zweiten Durchgang ermittelte magnetische Induktionsfluss 59 den zugehörigen Referenzwert betragsmäßig um einen einstellbaren zweiten Schwellenwert unterschreitet, wird eine zumindest teilweise Entmagnetisierung im Rotor, insbesondere der Permanentmagnete bei permanenterregten Synchronmaschinen, erkannt. Zusätzlich wird in diesem Fall im neunten Verfahrensschritt 190 noch eine Warnung ausgegeben und/oder der weitere Betrieb des Elektromotors 10 unterbunden.

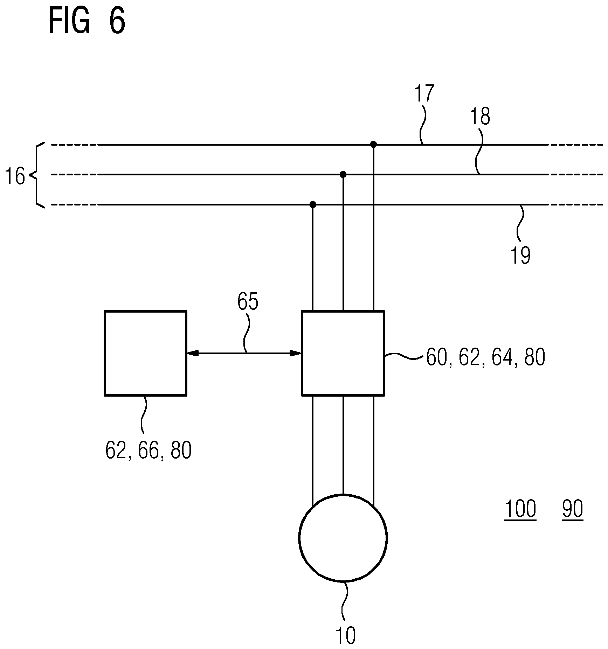

Des Weiteren zeigt FIG 6 eine Ausführungsform der erfindungsgemäßen Motoranordnung 90, die einen Elektromotor 10 umfasst, der als permanenterregte Synchronmaschine 10 ausgebildet ist. Der Elektromotor 10 ist mit einer mehrphasigen Stromversorgung 16 verbunden, die drei Phasen 17, 18, 19 umfasst. Zwischen den Elektromotor 10 und die Stromversorgung 16 ist ein Sanftstarter 62 geschaltet, der eine Steuereinheit 62 aufweist, die als interne Steuereinheit 64 ausgebildet ist. Der Sanftstarter 60 umfasst auch eine Mehrzahl an Halbleiterschaltern 68, die jeweils mit den Phasen 17, 18, 19 verbunden sind. Auf der Steuereinheit 62 ist ein Segment eines Computerprogrammprodukts 80 ausführbar gespeichert, mit dem das erfindungsgemäße Verfahren 100 zur Parameterbestimmung teilweise umgesetzt wird. Das Segment des Computerprogrammprodukts 80 in der internen Steuereinheit 64 des Sanftstarters 60 ist dazu ausgebildet, Betätigungsbefehle an die Halbleiterschalter 68 auszugeben. Der Sanftstarter 60 ist über eine Kommunikationsverbindung 65 mit einer Steuereinheit 60 verbunden, die als übergeordnete Steuereinheit 66 ausgebildet ist. In der übergeordneten Steuereinheit 66 ist auch ein Segment eines Computerprogrammprodukts 80 ausführbar gespeichert. Die Segmente des Computerprogrammprodukts 80 wirken über die Kommunikationsverbindung 65 zusammen und implementieren im Zusammenspiel das erfindungsgemäße Verfahren 100.

**Patentansprüche**

1.  Verfahren (100) zum Betrieb eines Elektromotors (10), mittels eines Sanftstarters (60) umfassend die Schritte:

    a) Herstellen einer Ausrichtung (25) des Rotors (14) zum Stator (12) des Elektromotors (10), in der sich deren magnetische Nordpole (22) und magnetische Südpole (24) gegenüberstehen;

    b) Erzeugen eines Testpulses (30) in einer Statorwicklung (15) des Elektromotors (10) entlang der Ausrichtung (25) des Rotors (14) zum Stator (12);

    c) Ermitteln einer Motorinduktivität (37) in einer Startphase (42) und/oder Endphase (51) eines Erfassungsfensters (40), und

    d) Ermitteln eines Motorwiderstands (31) in einer Amplitudenphase (44), die zwischen der Startphase (42) und der Endphase (51) liegt;

    wobei in der Startphase (42) und/oder der Endphase (51) ein betragsmäßiges Maximum (36) einer Motorspannung (34) vorliegt.

2.  Verfahren (100) nach Anspruch 1, **dadurch gekennzeichnet, dass** in einem weiteren Schritt e) der Elektromotor (10) mittels eines Anlaufpulses (55) in Rotation versetzt wird, und in einem Schritt f) ein geometrisches Addieren von induzierten Motorspannungen (34) und Erfassen einer Drehgeschwindigkeit (58) des Rotors (14) erfolgen, und in einem weiteren Schritt g) anhand eines Amplitudenwerts der geometrisch addierten induzierten Motorspannungen (34) ein Erkennen eines magnetischen Induktionsflusses (59) erfolgt.

3.  Verfahren (100) nach einem der Anspruch 1 oder 2, **dadurch gekennzeichnet, dass** die Startphase (42), die Amplitudenphase (44) und die Endphase (51) unmittelbar aufeinander folgen oder dazwischen der Amplitudenphase (44), der Startphase (42) und/oder der Endphase (51) eine Inaktivphase (46) vorliegt.

4.  Verfahren (100) nach einem der Ansprüche 1 bis 3, **dadurch gekennzeichnet, dass** das im Schritt c) die Motorinduktivität (37) mittels der gemessenen Motorspannung (34) und einem Stromgradienten (49) ermittelt wird.

5.  Verfahren (100) nach einem der Ansprüche 1 bis 4, **dadurch gekennzeichnet, dass** im Schritt d) der Motorwiderstand (31) mittels einer gemessenen Motorspannung (34) und einer zugehörigen Stromstärke (32) ermittelt wird.

6.  Verfahren (100) nach Anspruch 5, **dadurch gekennzeichnet, dass** das Ermitteln des Motorwiderstands (31) im Schritt d) ferner mittels des Stromgradienten (49) und der im Schritt c) ermittelten Motorinduktivität (37) erfolgt.

7.  Verfahren (100) nach einem der Ansprüche 1 bis 4, **dadurch gekennzeichnet, dass** das Ermitteln der Motorinduktivität (37) im Schritt c) ferner mittels der Stromstärke (32) und dem im Schritt d) ermittelten Motorwiderstandes (31) erfolgt.

8. Verfahren (100) nach einem der Ansprüche 2 bis 7, **dadurch gekennzeichnet, dass** im Schritt g) für eine Mehrzahl an Werten des magnetischen Induktionsflusses (59) über eine einstellbare Periode (57) eine statistische Auswertung, insbesondere eine arithmetische Mittelung, eine geometrische Mittelung, eine Medianbildung, oder ein Abgleich mit einem virtuellen Modell erfolgt.

9. Verfahren (100) nach einem der Ansprüche 1 bis 8, **dadurch gekennzeichnet, dass** in einem ersten Durchgang zumindest die Schritte a), b) und d) zur Ermittlung eines Referenzwerts für den Motorwiderstand (31) durchgeführt werden, in einem zweiten Durchgang zumindest der Motorwiderstand (31) erfasst wird, und eine Erwärmung des Elektromotors (10) erkannt wird, wenn der im zweiten Durchgang ermittelte Motorwiderstand (31) den zugehörigen Referenzwert betragsmäßig um mindestens einen ersten Schwellenwert übersteigt.

10. Verfahren (100) nach einem der Ansprüche 2 bis 9, **dadurch gekennzeichnet, dass** im ersten Durchgang für den magnetischen Induktionsfluss (59) ein Referenzwert ermittelt wird, in einem zweiten Durchgang der magnetische Induktionsfluss (59) erfasst wird, und eine zumindest teilweise Entmagnetisierung im Rotor (14) erkannt wird, wenn der im zweiten Durchgang ermittelte Induktionsfluss (59) den zugehörigen Referenzwert um mindestens einen zweiten Schwellenwert betragsmäßig unterschreitet.

11. Verfahren (100) nach einem der Ansprüche 2 bis 10, **dadurch gekennzeichnet, dass** im ersten Durchgang für den magnetischen Induktionsfluss (59) ein Referenzwert ermittelt wird und in einem zweiten Durchgang der magnetische Induktionsfluss (59) erfasst wird, und eine Erwärmung des Elektromotors (10) erkannt wird, wenn der im zweiten Durchgang ermittelte magnetische Induktionsfluss (59) den zugehörigen Referenzwert betragsmäßig unterschreitet.

12. Verfahren (100) nach einem der Ansprüche 9 bis 11, **dadurch gekennzeichnet, dass** eine Warnung ausgegeben wird und/oder ein weiterer Betrieb des Elektromotors (10) unterbunden wird, wenn eine Erwärmung des Elektromotors (10) und/oder eine zumindest teilweise Entmagnetisierung im Rotor (14) erkannt wird.

13. Verfahren (100) nach einem der Ansprüche 1 bis 12, **dadurch gekennzeichnet, dass** der Testpuls (30) durch ein einmaliges Schalten von mindestens zwei Halbleiterschaltern (68) in zwei zu entsprechenden Statorwicklungen gehörigen stromführenden Phasen erzeugt wird.

14. Computerprogrammprodukt (80), das in einer Steuereinheit (62) ausführbar ist und dazu ausgebildet ist, Messwerte zu empfangen und Befehle an Komponenten eines Sanftstarters (60) zu erzeugen, **dadurch gekennzeichnet, dass** das Computerprogrammprodukt (80) zur Durchführung eines Verfahrens (100) nach einem der Ansprüche 1 bis 13 ausgebildet ist.

15. Steuereinheit (62) für eine Motoranordnung (90), die dazu ausgebildet ist, Messwerte einer Motorspannung (34), einer Stromstärke (32) und/oder eines Stromgradienten (49) zu empfangen und Befehle zur Betätigung eines Halbleiterschalters (68) auszugeben, **dadurch gekennzeichnet, dass** die Steuereinheit (62) mit einem Computerprogrammprodukt (80) nach Anspruch 14 ausgestattet ist.

16. Sanftstarter (60) für den Betrieb eines Elektromotors (10), insbesondere einen Elektromotor mit permanenter Erregung, **dadurch gekennzeichnet, dass** der Sanftstarter (60) eine Steuereinheit (62) gemäß Anspruch 15 umfasst.

17. Motoranordnung (90) mit einem Elektromotor (10), insbesondere einen Elektromotor mit permanenter Erregung, umfassend eine Stromversorgung (16), die mit einem Sanftstarter (60) verbunden ist, der wiederum mit dem Elektromotor (10) gekoppelt ist, **dadurch gekennzeichnet, dass** der Sanftstarter (60) gemäß Anspruch 16 ausgebildet ist.

## Claims

1. Method (100) for operating an electric motor (10) by means of a soft starter (60), comprising the steps of:

   a) establishing an orientation (25) of the rotor (14) in relation to the stator (12) of the electric motor (10), in which orientation the magnetic north poles (22) and magnetic south poles (24) of said rotor and stator are opposite one another;
   b) generating a test pulse (30) in a stator winding (15) of the electric motor (10) along the orientation (25) of the rotor (14) with respect to the stator (12);
   c) ascertaining a motor inductance (37) in a start phase (42) and/or end phase (51) of a detection window (40), and
   d) ascertaining a motor resistance (31) in an amplitude phase (44) which is situated between the start phase (42) and the end phase (51);

   wherein a motor voltage (34) is at a maximum (36) in the start phase (42) and/or the end phase (51).

2. Method (100) according to Claim 1, **characterized**

**in that**, in a further step e), the electric motor (10) is set in rotation by means of a start-up pulse (55) and, in a step f), induced motor voltages (34) are geometrically added and a rotational speed (58) of the rotor (14) is detected and, in a further step g), a magnetic flux (59) is identified on the basis of an amplitude value of the geometrically added induced motor voltages (34).

3. Method (100) according to either of Claims 1 and 2, **characterized in that** the start phase (42), the amplitude phase (44) and the end phase (51) immediately follow one another or there is an inactive phase (46) between the amplitude phase (44), the start phase (42) and/or the end phase (51).

4. Method (100) according to one of Claims 1 to 3, **characterized in that**, in step c), the motor inductance (37) is ascertained using the measured motor voltage (34) and a current gradient (49).

5. Method (100) according to one of Claims 1 to 4, **characterized in that**, in step d), the motor resistance (31) is ascertained using a measured motor voltage (34) and an associated current intensity (32).

6. Method (100) according to Claim 5, **characterized in that** the motor resistance (31) is further ascertained in step d) using the current gradient (49) and the motor inductance (37) ascertained in step c).

7. Method (100) according to one of Claims 1 to 4, **characterized in that** the motor inductance (37) is further ascertained in step c) using the current intensity (32) and the motor resistance (31) ascertained in step d).

8. Method (100) according to one of Claims 2 to 7, **characterized in that**, in step g), statistical evaluation, in particular calculation of an arithmetic mean, calculation of a geometric mean, calculation of a median or comparison with a virtual model, is performed for a plurality of values for the magnetic flux (59) over an adjustable period (57).

9. Method (100) according to one of Claims 1 to 8, **characterized in that**, in a first pass, at least steps a), b) and d) are carried out for ascertaining a reference value for the motor resistance (31) and, in a second pass, at least the motor resistance (31) is detected, and heating of the electric motor (10) is identified if the motor resistance (31) ascertained in the second pass exceeds the associated reference value by at least a first threshold value.

10. Method (100) according to one of Claims 2 to 9, **characterized in that**, in the first pass, a reference value is ascertained for the magnetic flux (59) and, in a second pass, the magnetic flux (59) is detected, and at least partial demagnetization in the rotor (14) is identified if the magnetic flux (59) ascertained in the second pass falls below the associated reference value by at least a second threshold value.

11. Method (100) according to one of Claims 2 to 10, **characterized in that**, in the first pass, a reference value is ascertained for the magnetic flux (59) and, in a second pass, the magnetic flux (59) is detected, and heating of the electric motor (10) is identified if the magnetic flux (59) ascertained in the second pass falls below the associated reference value.

12. Method (100) according to one of Claims 9 to 11, **characterized in that** a warning is output and/or further operation of the electric motor (10) is suppressed if heating of the electric motor (10) and/or at least partial demagnetization in the rotor (14) are/is identified.

13. Method (100) according to one of Claims 1 to 12, **characterized in that** the test pulse (30) is generated by switching at least two semiconductor switches (68) once in two current-carrying phases associated with corresponding stator windings.

14. Computer program product (80) which can be run in a control unit (62) and is designed to receive measurement values and to generate commands for components of a soft starter (60), **characterized in that** the computer program product (80) is designed for carrying out a method (100) according to one of Claims 1 to 13.

15. Control unit (62) for a motor arrangement (90), which is designed to receive measurement values for a motor voltage (34), a current intensity (32) and/or a current gradient (49) and to output commands for operating a semiconductor switch (68), **characterized in that** the control unit (62) is equipped with a computer program product (80) according to Claim 14.

16. Soft starter (60) for operating an electric motor (10), in particular an electric motor with permanent excitation, **characterized in that** the soft starter (60) comprises a control unit (62) according to Claim 15.

17. Motor arrangement (90) with an electric motor (10), in particular an electric motor with permanent excitation, comprising a power supply (16) which is connected to a soft starter (60) which, in turn, is coupled to the electric motor (10), **characterized in that** the soft starter (60) is designed according to Claim 16.

**Revendications**

1. Procédé (100) pour faire fonctionner un moteur (10) électrique au moyen d'un démarreur (60) progressif comprenant les stades :

a) on produit une orientation (25) du rotor (14) par rapport au stator (12) du moteur (10) électrique, dans laquelle leurs pôles (22) magnétiques nord et leurs pôles (24) magnétiques sud se font face ;

b) on produit une impulsion (30) de test dans un enroulement (15) statorique du moteur (10) électrique suivant l'orientation (25) du rotor (14) par rapport au stator (12) ;

c) on détermine une inductance (37) du moteur dans une phase (42) de début et/ou une phase (51) de fin d'une fenêtre (40) de relevé, et

d) on détermine une résistance (31) du moteur dans une phase (44) d'amplitude, qui est entre la phase (42) de début et la phase (51) de fin ;

dans lequel, dans la phase (42) de début et/ou dans la phase (51) de fin, il y a un maximum (36) en valeur absolue d'une tension (34) du moteur.

2. Procédé (100) suivant la revendication 1, **caractérisé en ce que** dans un autre stade e), on met le moteur (10) électrique en rotation au moyen d'une impulsion (55) de démarrage, et dans un stade f), il est produit une addition géométrique de tensions (34) induites du moteur et un relevé d'une vitesse (58) de rotation du rotor (14), et dans un autre stade g), il est produit, à l'aide d'une valeur d'amplitude des tensions (34) induites du moteur ajoutées géométriquement, une détection d'un flux (59) de détection magnétique.

3. Procédé (100) suivant l'une des revendications 1 ou 2, **caractérisé en ce que** la phase (42) de début, la phase (44) d'amplitude et la phase (51) de fin se succèdent directement ou **en ce qu'**il y a une phase (46) inactive entre la phase (44) d'amplitude, la phase (42) de début et/ou la phase (51) de fin.

4. Procédé (100) suivant l'une des revendications 1 à 3, **caractérisé en ce que** l'on détermine au stade c) l'inductance (37) du moteur au moyen de la tension (34) mesurée du moteur et d'un gradient (49) de courant.

5. Procédé (100) suivant l'une des revendications 1 à 4, **caractérisé en ce que** l'on détermine au stade d) la résistance (31) du moteur au moyen d'une tension (34) mesurée du moteur et d'une intensité (32) associée du courant.

6. Procédé (100) suivant la revendication 5, **caractérisé en ce que** la détermination de la résistance (31) du moteur au stade d) s'effectue en outre au moyen du gradient (49) de courant et de l'inductance (37) du moteur déterminés au stade c).

7. Procédé (100) suivant l'une des revendications 1 à 4, **caractérisé en ce que** la détermination de l'inductance (37) du moteur au stade c) s'effectue en outre au moyen de l'intensité (32) du courant et de la résistance (31) du moteur déterminées au stade d).

8. Procédé (100) suivant l'une des revendications 2 à 7, **caractérisé en ce qu'**au stade g) pour une pluralité de valeurs du flux (59) d'induction magnétique sur une durée (57) réglable a lieu une exploitation statistique, notamment un calcul d'une moyenne arithmétique, un calcul d'une moyenne géométrique, une formation de médiane ou un alignement sur un modèle virtuel.

9. Procédé (100) suivant l'une des revendications 1 à 8, **caractérisé en ce que**, dans un premier passage, on effectue au moins les stades a), b) et d) pour la détermination d'une valeur de référence de la résistance (31) du moteur, dans un deuxième passage on relève au moins la résistance (31) du moteur et on détecte un échauffement du moteur (10) électrique, si la résistance (31) du moteur déterminée dans le deuxième passage dépasse en valeur absolue, d'au moins une première valeur de seuil, la valeur de référence associée.

10. Procédé (100) suivant l'une des revendications 2 à 9, **caractérisé en ce que**, dans le premier passage, on détermine une valeur de référence du flux (59) d'induction magnétique, dans un deuxième passage, on relève le flux (59) d'induction magnétique et on détecte une démagnétisation au moins partielle du rotor (14), si le flux (59) d'induction déterminé dans le deuxième passage est inférieur en valeur absolue, d'au moins une deuxième valeur de seuil, à la valeur de référence associée.

11. Procédé (100) suivant l'une des revendications 2 à 10, **caractérisé en ce que**, dans le premier passage, on détermine une valeur de référence du flux (59) d'induction magnétique et, dans un deuxième passage, on relève le flux (59) d'induction magnétique et on détecte un échauffement du moteur (10) électrique, si le flux (59) d'induction magnétique déterminé dans le deuxième passage est inférieur en valeur absolue à la valeur de référence associée.

12. Procédé (100) suivant l'une des revendications 9 à 11, **caractérisé en ce qu'**on émet une alerte et/ou on arrête de continuer à faire fonctionner le moteur (10) électrique si l'on détecte un échauffement du moteur (10) électrique et/ou une démagnétisation au moins partielle du rotor (14).

**13.** Procédé (100) suivant l'une des revendications 1 à 12, **caractérisé en ce que** l'on produit l'impulsion (30) de test en fermant une fois au moins deux interrupteurs (68) à semi-conducteur dans deux phases courant associés à des enroulements statoriques correspondants.

**14.** Produit (80) de programme d'ordinateur, qui peut être réalisé dans une unité (62) de commande et qui est constitué pour recevoir des valeurs de mesure et pour produire des instructions à des composants d'un démarreur (60) progressif, **caractérisé en ce que** le produit (80) de programme d'ordinateur est constitué pour effectuer un procédé (100) suivant l'une des revendications 1 à 13.

**15.** Unité (62) de commande d'un agencement (90) de moteur, qui est constituée pour recevoir des valeurs de mesure d'une tension (34) du moteur, d'une intensité (32) du courant et/ou d'un gradient (49) de courant et pour émettre des instructions d'actionnement d'un interrupteur (68) à semi-conducteur, **caractérisé en ce que** l'unité (62) de commande est équipée d'un produit (80) de programme d'ordinateur suivant la revendication 14.

**16.** Démarreur (60) progressif pour faire fonctionner un moteur (10) électrique, notamment un moteur électrique à excitation permanente, **caractérisé en ce que** le démarreur (60) progressif comprend une unité (62) de commande suivant la revendication 15.

**17.** Agencement (90) de moteur ayant un moteur (10) électrique, notamment un moteur électrique à excitation permanente, comprenant une alimentation (16) en courant, qui est reliée un démarreur (60) progressif, lequel à son tour est connecté au moteur (10) électrique, **caractérisé en ce que** le démarreur (60) progressif est constitué suivant la revendication 16.

# FIG 1

# FIG 2

# FIG 3

## FIG 4

# FIG 5

100
10

110, 12, 14, 22, 24, 25

120, 30

130, 37, 40, 42, 51

140, 31, 40, 44

150, 14, 34, 58

160, 34

200

170, 34, 59

180

190

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100060210 A1
- EP 2016074880 W
- EP 2016077201 W

**In der Beschreibung aufgeführte Nicht-Patentliteratur**

- **P. ZHANG ; Y. DU ; T. G. HABETLER ; B. LU.** Improving Thermal Recovery Time for Soft-Starter-Connected AC Motors With Intermittent Periodic Duty Cycles. *IEEE Transactions on Industry Applications,* September 2010, vol. 46 (5), 1927-1935

- **N. MATSUI ; T. TAKESHITA.** A novel starting method of sensorless salient-pole brushless motor. *Proceedings of 1994 IEEE Industry Applications Society Annual Meeting,* 1994, vol. I, 386-392